# EUROPEAN PATENT APPLICATION

(11) **EP 2 860 674 A1**
(43) Date of publication of application: **15.04.2015**
(21) Application number: 13188428.0
(22) Date of filing: 14.10.2013
(51) Int. Cl.: G06Q 10/06

(54) **Process for validating a hypothesis of behavior of a plurality of data sources**

(71) Applicant: ALCATEL LUCENT, 92100 Boulogne-Billancourt (FR)
(72) Inventor: Roelands , Marc, 2018 ANTWERP (BE)
(74) Representative: Camus, Olivier Jean-Claude

(57) **Abstract**

Abstract : The invention relates to a process for validating a hypothesis of behavior of a plurality of data sources, said data sources being connected to a service platform via a network, said service platform comprising a plurality of service templates, said hypothesis comprising at least one parameter, said process comprising :
- a first step of defining a first value of the at least one parameter of the hypothesis of behavior to validate ;
- a second step of implementing the hypothesis of behavior to validate into at least one of the plurality of service templates ;
- a third step of correlating, according to a correlation method, a first set of data collected from a selection of data sources in order to calculate a second value of the at least one parameter of the hypothesis of behavior to validate.

## Description

### FIELD OF THE INVENTION

The invention relates to the technical field of system design of networked service platforms, in its broadest sense, including but not limited to enterprise service platforms, over web-based service platforms, up to telecom service platforms, whether they are designed to be 'horizontal', i.e. application domain agnostic, or designed specifically for one or more particular application domains.

The science and technology fields the invention is progressing the state of art on include the field of information and communication technologies (as the main potential implementation frame for service platform architectures), the scientific field of autonomous computing, the scientific field of ubiquitous computing, ambient intelligence and context-aware services, the scientific field of knowledge engineering and semantics, and the scientific field of artificial intelligence and in particular machine learning.

### TECHNICAL BACKGROUND

A way to systematically validate a model of knowledge concerning the behavior of part of a system-external environment in a service platform, i.e. data sources, is needed. In order to solve the problem of systematic validation and tuning of said model, especially in the context of a deployed service platform, three solutions are generally known to address part of the problem.

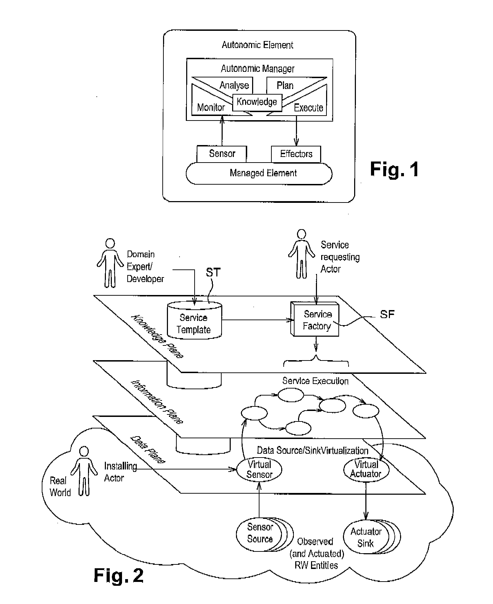

The first one known consists in autonomous computing systems, inspired by autonomous agent systems, based on a MAPE-K (monitor-analyze-plan-execute over a knowledge base) autonomic control loop concept. Figure 1 illustrates the basic principle of a MAPE-K autonomic control loop concept. There is a managed element comprising sensors and effectors; and an autonomic element. The autonomic element gathers measurements from the sensors of the managed element. The managed elements provide sensors and effectors to be managed. The monitor block collects the details from the managed elements and aggregates, correlates and filters it. The analyze block performs data analysis and reasoning on the elements provided by the monitor block. The plan block structures the actions needed to achieve goals and objectives. The execute block changes the behavior of the managed element using the effectors and based on the action proposed by the plan block. The knowledge block comprises standard data shared among the monitor, analyze, plan and execute blocks. It includes data such as topology information, historical logs, metrics, symptoms and policies.

The main limitation of this solution is that no explicit distinction is made between the knowledge modeling the behavior of the system-external environment on which services act upon and the knowledge modeling the behavior of the system and the resource-occupation of the services running in it, especially with respect to horizontal, multi-service or service-programmable environments. As a result, phenomena occurring in the system-external environment are not modeled independently and so reuse of such phenomena as concepts across multiple services cannot be leveraged to the benefit of a horizontal service platform.

The second one consists in architectural service models for service platforms, potentially executing services in a distributed manner, for example using a service template notion as illustrated on figure 2.

The basic principle of this partial solution is that a domain expert or developer provides in a first step at least one Service Template (ST) in a Service Template Repository (STR) of the service platform. In a second step, a platform user, as a service-requesting actor, makes a Service Request (SR) which the platforms matches to the applicable templates in a Service Factory (SF). The SF produces a decomposed service description by combining parameter values contained in the SR for template instantiation with the script and/or code contained in the ST, as such producing an executable Service Instance (SI) which can be represented e.g. by a graph of processing nodes describing how system-external data sources are processed to produce data for system-external data sinks. In a third step, this SI is deployed and executed in a execution environment of the service platform.

The main limitation of this solution is that although the knowledge can be reused as embedded in service templates, there is no mechanism in place to validate said knowledge in executing service contexts, which means there are less possibilities to leverage it as a platform asset, also by not being able to extend the collection of relevant knowledge a posteriori by systematically and selectively validating new knowledge.

The third one consists in systems combining semantic modeling and machine learning for a specific real-world behavior modeling such as sensor-based activity and context recognition. Examples of the third solution are described in the following document: A. Riener, M. Wirz, D. Roggen, K. Kloch, and P. Lukowicz, "Pervasive computing in the large: The socionical approach", Adjunct Proceedings of the 8th International Conference on Pervasive Computing, Helsinki, Finland, May 2010. It is also described in this document: M. Kurz, G. Hölzl, A. Ferscha, A. Calatroni, D. Roggen, G. Tröster, H. Sagha, R. Chavarriaga, J. del R. Millán, D. Bannach, K. Kunze and P. Lukowicz, "The OPPORTUNITY Framework and Data Processing Ecosystem for Opportunistic Activity and Context Recognition", International Journal of Sensors, Wireless Communications and Control, Vol.1, 2011.

The main drawback of this solution is that these systems illustrate the viability of using machine learning techniques but are restricted to very specific real-world behavior modeling, linking by implementation a single service to a single real-world behavior model, thus also not tuning the knowledge from the perspective of a collection of service execution contexts.

### SUMMARY

It is an object of the invention to overcome the limitations of the existing solutions by combining and extending them, as such providing a method for systematically validating and tuning behavioral models of knowledge concerning the behavior of part of a system-external environment in a service platform and/or part of the system itself.

To this end, the invention provides a process for validating a hypothesis of behavior of a plurality of data sources, said data sources being connected to a service platform via a network, said service platform comprising a plurality of service templates, said hypothesis comprising at least one parameter, said process comprising :
- a first step of defining a first value u of the at least one parameter of the hypothesis of behavior to validate ;
- a second step of implementing the hypothesis of behavior to validate into at least one of the plurality of service templates ;
- a third step of correlating, according to a correlation method, a first set of data collected from a selection of data sources in order to calculate a second value u' of the at least one parameter of the hypothesis of behavior to validate.

One benefit of this method is that a wide variety of real-world phenomena, identified as existing in a system-external environment (e.g. by an expert platform user), as well as system-internal phenomena, can systematically and accumulatively be validated in order to leverage them for service platform optimization and other enhancements.

Herein, the terms "data sources" should be understood as including any source of live data in a network, for example in the Internet of Things vision where physical sensors and actuators are connected to the Internet, but also for example in the Internet at large.

Herein the terms "service platform" should be understood as a machine and server software, or network-based service, which is capable of executing services from their service specifications, optionally allowing "service creation", i.e. translation of high-level service descriptions or requests into their full-detail executable specification, in a pre-execution planning or analysis phase.

Herein the terms "service template" should be understood as a template allowing creating or deploying a range of possible service instances on a service platform. A template is a means to create service instances from simple descriptions or request formulations by feeding a set of parameter values to the template, having the template containing all other data needed to create an instance. A template thus contains, or can be resolved to, all the code (executable or equivalent) and knowledge specifications needed to create an executable service instance from a number of specific instance parameters, as contained in the service request or description. Service templates can be organized in hierarchies; i.e. one template can rely on lower level templates to obtain all needed information to instantiate a service instance.

Herein the terms "service instance" should be understood as an instance of actually executable service code, as typically derived from a template and parameters, thus capturing the actual execution context in which the instance is embedded. It is equivalent to what one would obtain by directly programming a service instance in a scripting or compiled programming language.

Herein the term "behavior" should be understood as 'rules' (static facts, such as reflected in ontologies, also including rules of behavior) applicable universally (in a mathematical sense) to a realm or world scope, e.g. a part of the physical world, a part of a system, etc.

Herein the terms "hypothesis of behavior" should be understood as a hypothesis (assumption to be validated) about candidate or uncertain behavior. An expert can design a hypothesis of behavior (just like an expert can design a Service Template), describing also how the behavior can be validated for being true or having a degree of certainty to be true (confidence of parameters of the hypothesis). Hypothesis of behavior are referred to / pointed at / used in Service Templates (as part of the expert design).

The advantage of such a design method of templates and behavior is that this allows for automating hypothesis validation process.

The first step could be manually performed by a person, e.g. an expert. The third step could be automatically performed, according to a correlation method predefined by the expert or another actor.

According to not limited embodiments, the method can comprise one or more of the following additional characteristics:
- the process comprises a fourth step of updating the at least one parameter of the hypothesis with the second value. Once the second value has been calculated according to the correlation method, the second value of the at least one parameter replaces the first value of the at least one parameter. The second value is related to the success of the hypothesis in applying it in a collection of running service instances ;
- the second step and the third step are repeated once the fourth step has been performed, the at least one parameter being updated with the second value. The updated hypothesis is tested again through the data sources in order to validate it. At the end of this test, it could be updated again if necessary, thus a cognitive loop is created ;
- the correlation method comprises a statistical operation, the first set of data collected from the selection of data sources being correlated according to said statistical operation ;
- the process comprises a fifth step of modifying the second value of the at least one parameter into a third value according to an adaptation strategy. The adaptation strategy could temper the evolution of the parameter of the hypothesis if needed. It could be done, for example, by running a low-pass filter over the second value or by delaying updates of the actual hypothesis of behavior until the third step has exposed enough consecutive outputs for additional statistical confidence, for example by calculating the statistical variance of the second value of the parameter until it is below a given threshold, to only then update the hypothesis of behavior ;
- the adaptation strategy comprises an interpolation or extrapolation technique, observing the evolution of said at least one parameter for which new values are proposed by the correlation method, in turn proposing interpolated or extrapolated improved parameter values from that, so as to make the value of the at least one parameter evolve according to said adaptation strategy;
- the first step comprises defining the correlation method of the third step ;
- the first step comprises defining the adaptation strategy of the fifth step ;
- the behavior of the plurality of data sources comprises a second set of data, said second set of data corresponding to an output of said plurality of data sources in response to a service instance of at least one service template. The behavior of the plurality of data sources could be their connectivity and processing resource capabilities and resource usage costs, in general or in the context of specific type of services. Or, it could be laws relevant to the services to be executed on the service platform such as human behavior or mental state, economic resource costs and dependencies, laws of nature etc...
- the hypothesis comprises a plurality of parameter.

Some embodiments of the method in accordance with embodiments of the present invention are now described, by way of example only, and with reference to the accompanying drawings, in which:
- figure 1 schematically illustrates one method of the prior art;
- figure 2 schematically illustrates one method of the prior art;
- figure 3 schematically illustrates an embodiment of the invention;
- figure 4 schematically illustrates an embodiment of the invention;
- figure 5 schematically illustrates an embodiment of the invention.

It is noted that like reference numerals represent similar parts throughout the several views of the drawings

### DESCRIPTION OF EMBODIMENTS

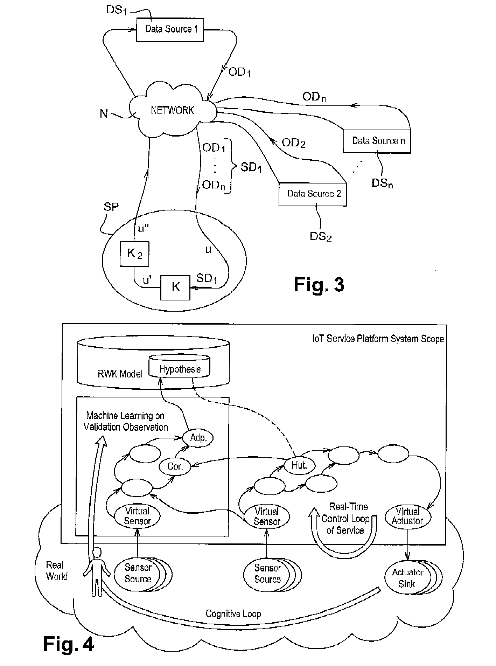

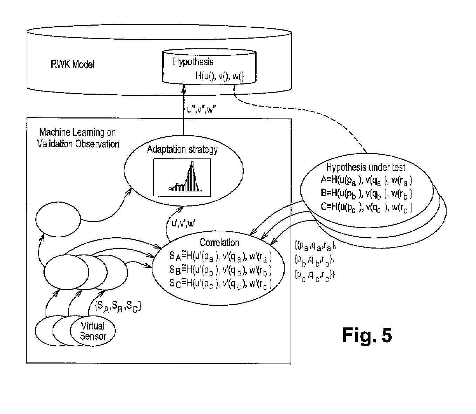

The first embodiment relates to an application of the invention in a context of temperature management for a building and is following the general principle as schematically represented in figure 3. Both figures 4 and 5 could also be referred to for illustrating said embodiment. In this embodiment, the data sources (DS1, DS2,..., DSn) are a plurality of temperatures sensors throughout the building, e.g. one in each room or hallway (plus optionally other ones for correlation, see further). The service platform SP is integrated with the building management system at hand. The service templates are the code describing (in the building management system) what needs to be done in order to control the building temperature according to a desired value curve in time, overall or for individual rooms. A building heating expert designs this template according to the needs of customers. A service instance, in this embodiment is an instance of the above template, as requested by the customer at some later stage, for controlling the building temperature(s) to specific value curves the customer specifies. It could be for example: keep computer room at 18°C at all times, move desk spaces to 20°C at least during office hours and allow a drop to 15°C outside office hours. The behavior to be validated is that the heating expert knows that heat radiates through walls at a certain pace, implying that heating (cooling) one room makes the temperature rise (drop) also in adjacent room eventually if the adjacent room is not temperature-controlled. This behavior can be put in the system by the expert as a formal set of behavior rules (e.g. using a knowledge modeling language such as RDF or equivalent). The expert also refers to them from one or more Service Templates (implying that the service instances derived from that template will take into account this knowledge of behavior. So in the above mentioned service template he can use this assumed model of behavior to express the functionality captured in the service template better/richer and (under assumption the hypothesis hold true) it will yield also more accurate or more efficiently its temperature control results. In this embodiment, the hypothesis of behavior (and its parameter(s)) are as follows: at some stage during or before the operation of a particular (or a range of) service platform(s) [the expert may be an employee of a building management service provider, or a building management platform manufacturer; so this may concern one or a range of service platform deployments], the expert may consider new Knowledge that may be valid and helpful for certain service contexts. For example, the expert may want to validate knowledge about the speed at which heat radiates through a particular wall type, e.g. a type of wall that happens to be used in many buildings in practice. Or he may suspect another phenomenon to exist/occur, that can be expressed as a parameterized equation or rule set (i.e. behavior, but since it is not sure yet whether it is certainly true, it is a hypothesis of behavior). Suppose in certain building topologies there is an extra heat flow apparently occurring in common hallways. With a number of parameters (for which the expert sets an initial value), the expert can thus launch the validation of this hypothesis, by referencing the hypothesis, as if it was assumed true, in a number of service templates. This will have as a result that from then on customers launching new service instances in their buildings will take part in validating the hypothesis as referenced in the template as the service instance is executing.

In this embodiment, the first set of data SD1 comprising data (OD1, OD2, ..., ODn) collected from data sources (in order to be correlated) could be the temperature sensors data only as anyway used by (other) service instances, e.g. using temperature sensors in adjacent rooms in addition to the temperature sensor of one particular room, as the collection of data source measurements as input to the correlation. Or it can include additional data sources not strictly needed for the functioning of the service instances, e.g. using end-user feedback (e.g. sensing of people manually turning a heating control knob in particular rooms indicating that the room is too cold or too hot) as part of the data sources used for the correlation processing. Anyone launching the service instances with the hypothesis-under-test (= instance of the hypothesis as part of the service instance), so according to the hypothesis design by the expert, will use a number of data sources for the correlation [the amount as required by the correlation procedure - in case of many hypothesis parameters, many sources are typically also needed].

Regarding the role of the expert and his expertise regarding the correlation method: his expertise is captured in the hypothesis design, which includes the correlation method and the optional adaptation strategy. For the correlation method, he uses a known/available/off-the-shelf correlation technique and applies it as follows :

Temperature in room A, being directly related to hypothesis parameter u is observed to deviate dTA from TA, the expected controlled temperature result, due to an apparent error in the hypothesis of behavior. A posteriori the observed result, u', can be calculated such that TA would indeed have been reached as desired. Same for Room B with parameter v, Room C with parameter w etc...

All the outputs i.e. the observed results, of the data sources after the service instance are correlated into the calculator K, which is a correlation node, as the fourth step of the method, for the hypothesis validation across multiple service instances. u thus becomes u' the second value. In this way, by construction, hypothesis validation can be automated with massive data becoming available from a range of service instances, implying plentiful number of data sources that can be processed to eventually be live inputs to the single correlation node used for the hypothesis validation.

In this embodiment, there is an adaptation strategy node, calculator K2, which performs a fifth step. The expert can consider adding an adaptation strategy processing node in the hypothesis validation. For example, from his temperature control expertise, he knows from experience that if he abruptly changes the hypothesis parameters, the related service instances will 'jump' back and forth from one hypothesis error situation to another (in the so-called parameter search space, this is as if jumping from one smaller hill to another and back, as such jumping 'over the big hill', representing the best parameter values sought for the hypothesis, , so never finding these best values). So the expert may judge it is better to only gradually change the parameters, according to a strategy to traverse the parameter space, e.g. averaging the previous parameter value u and the assumed "close to optimal" new value u' to obtain a 'moderately changed' value u", the third value, as the eventual update value for the hypothesis parameter.

The second embodiment relates to the context of smart home appliances such as programmable coffee machines, the functioning is schematically illustrated as well in figure 3.. Both figures 4 and 5 could also be referred to for illustrating said embodiment. In this embodiment, the data sources (DS1, DS2, ..., DSn) are various 'sensors' throughout the home, including movement or other presence detection sensors, localization systems, light switches, buttons on the coffee machine, fridge door and other door movement detectors, etc., which all provide data to the service platform SP. All these data sources are used by the service platform to monitor the activities and behavior of the inhabitants of the home.

The service platform SP is a generic implementation as a service platform in the Internet, used simultaneously for many application domains, or can be implemented as running locally in the home on so-called residential gateway, or a distributed implementation comprising an Internet-based and a local home part.

The service templates could be, for example:
- a code describing how to automatically switch on the coffee machine and brew a specific type of coffee, using the behavior model of the inhabitants to predict at what time they desire what coffee type;
- or a code describing how to automatically run a maintenance service on the coffee machine given the usage intensity patterns over time and the changing knowledge of the service company that is monitoring all the coffee machines worldwide.

In both examples of the service templates, the service instances are the specific instances of the two example services as processing the data from the specific data sources in a specific home.

The behavior could be the behavior of inhabitants or the need for maintenance of the coffee machine under various usage patterns.

In this embodiment, hypotheses of behavior to validate could be:
- "people have a daily wake-up pattern of switching on light A, and moving through hallway as detected by sensor B", or
- "people in home H have 2 regular coffee times; Monday-Friday this is at time X1; sat-sun this is at time X2; with X1 and X2, assuming the same time difference in wake-up pattern; X1 and X2 are calculated by statistical model", or
- "when used X >7 times a week, ... maintenance is recommended after N days"

Additional predefined knowledge can support the expert to more comfortably propose new hypotheses like these; a standard knowledge engineering practice, using semantics and ontologies, can be presumed to accommodate this. Behavioral rules can also be gradually built up during service platform lifetime, starting with some basic patterns of inhabitant behavior up to sophisticated smartness for the coffee services, all possibly validated by the method.

In this example, as part of the validation graph, inhabitant not consuming coffee which was auto-prepared, or inhabitant doing manual operations to make coffee, or doing manual operations to clean the machine may be derived from the 'machine button push' data sources available to the service platform, or other activity sensing..

Based on the data sources previously mentioned, the expert can describe a way to calculate which parameter values (X1, X2, X, A, B ...) in the above hypothesis examples are fitting best to all results obtained simultaneously. The chosen correlation method finds an optimal compromise in such a way that on average, the outcomes to the behavior rules match as best as possible the desired rule outcomes (i.e. suggesting more accurately best coffee brewing and maintenance times based on the live observed events). The expert essentially designs/choses which data sources are considered as a posteriori test data, and which inputs are used as inputs to the correlation node.

The expert may know from experience that the parameters should always be within certain boundaries, e.g. resulting in maintenance at least 2 times a year, or know from previous rule testing that there is a convergence problem when jumping too quickly from one correlation update to another. The adaptation strategy expresses his choice on how to temper the correlation conclusions.

A third embodiment of the invention relates to the context of a customer care or customer relationship management (CRM), for customer care in a context of telecom network, mobile and customer premises equipment.

In this third embodiment, the data sources are physical and software monitoring probes in a telecom equipment providing:
- live data events concerning status and working conditions of said telecom equipment;
- live updates concerning the end-user call data records (CDR). The call data records terms cover the regularly stored data on who is calling, when and for how long. In a CRM system with automated customer guidance, e.g. via touchtone/voice, this is complemented with record data like "reason of the call", "customer ID".

In this third embedment the service platform is integrated with a template-based workflow system. A workflow system consists typically of a workflow graph editing environment plus a workflow engine for executing the workflow instances. The workflows (templates, executable instances) are thus a specific example of services (templates, executable instances). As the hypothesis of behavior can be generally implemented as a sub-template referenced by the actual service templates, the hypothesis of behavior can be implemented as a sub-workflow with an instance of the behavior model running as a sub-part of each of the main workflow instances.

In the third embodiment, the service template is a customer care workflow template. It is made in a workflow editor by a workflow analyst, i.e. describing a procedure that a helpdesk agent (as service requestor) or an end-user (in a self-service case) has to follow in order to tackle a problem that the end-user is having with the telecom equipment he is paying for. The service instance, here, is a running instance of the customer care workflow template, i.e. when the call agent (or the end-user) has selected the procedure and is going through the procedure.

In this embodiment the behavior is :
- the behavior of the end-user in the context of a technical problem (e.g.: repeating calls of the end-user to the helpdesk);
- the behavior of the network and equipment on which the commercial telecom service relies;
- the behavior of the call agent launching the workflow (possibly launching the wrong workflow, repeating things that should never be repeated etc...)

In this third embodiment, the hypothesis of behavior could be made by workflow analysts or other experts, such as a helpdesk supervisor or another customer care or technical expert. The hypothesis of behavior could be related to an underlying reason of why end-customers make repeated calls in certain cases, the reason why a call agent makes repeated mistakes or technical failure assumptions to be tested and to be avoided when identified. The hypothesis would be represented as extensions of the current main workflows (service templates), and testing it can result in new parameter values that are directly used in new variants of the main workflow (the service template) or permanent extensions to a set of workflow templates (after expert acceptance of the validation) which then improve the customer care procedures, e.g. making them more efficient. Alternatively, the hypothesis can be described as such that technical measures in the main commercial telecom service are identified by the hypothesis validation. After human acceptance, this may result in updating the technical infrastructure or adding forced-behavior rules to another operations-related workflow system. The latter effect could also be obtained by today's commercial data analytics solutions, but the invention adds a degree of operational automation to it.

In order to choose the appropriate correlation method in this third embodiment, the expert could use a library of off-the shelf techniques and combine this with insights from his technical telecom solution expertise or customer care experience. In this embodiment, an adaptation strategy may not be needed.

Figure 4 schematically illustrates main principles of a process for validating a hypothesis of behavior of a plurality of data sources. The Cor. processing node is the essential central element of the process. The Cor. processing node is the one performing the correlation method step i.e. the third step of the method. The Cor. node is meant to have an arbitrary number of pre and post processing nodes around it, and is meant to use a number of inputs from additional inputs as well as from the Hut. node instance (corresponding to the Hypothesis under test) in each of potentially many concurrently running service instances. Figure 4 corresponds to a context of Internet of Things (loT) service platform, but the solution must be seen as more generally applicable to any service platform that describes services consisting of data sources and sinks of data connected via data stream pipes to a graph of processing nodes.

Figure 4 shows a Hypothesis collected as part of a Real World Knowledge (RWK) Model. For example, the Hypothesis could be postulated, in a first step, by a domain expert for validation and reuse in a particular application domain or even a broader more universal scope. Figure 4 shows how this Hypothesis is used to derive situational data in the context of the processing graph of an executing service instance (processing node labeled as Hut "Hypothesis under test"), i.e. once the second step has been performed. The service instance interacts with the real world typically as a real-time control loop in which the model of the hypothesis is effectively used. In figure 4, the box labeled "Machine Learning on Validation Observation" contains the Hypothesis-specific processing to collect and interpret the feedback received from an extended cognitive loop. The cognitive loop is the loop for validating the Hypothesis of behavior. The cognitive loop contains the correlation node, labeled Cor., (for performing the third step of the method); and an adaptation strategy node, labeled Adp. (for performing the fifth step). The validation mechanism for implementing the method of validating the hypothesis of behavior is stored as part of the RWK model, in a similar way as a service template. The main part of the method is executed as one instance shared among multiple service instances, each of these service instances contain a Hut. node. Thus, the method leverages a high-amount of context relevant live feedback data from the real-world cognitive loop. The adaptation of the parameters is done incrementally, according to a fixed strategy (by an expert for example) after statistical evidence is accumulated (thanks to the correlation node/method), then closing the Cognitive Loop either by updating running service instances immediately or using the updated version for future service instance deployments.

Figure 5 schematically illustrates main principles of a process for validating a hypothesis of behavior of a plurality of data sources. Although this figure 5 could be used to illustrate in general the principle of a process for validating a hypothesis of behavior of a plurality of data sources, figure 5 is described in reference to an embodiment wherein to be in the case of the traffic management domain. For various services as used by citizens, the municipalities or public transport operators, it is of interest to identify which traffic densities are significant. The service context is a live navigation service offered to citizens, which takes into account current traffic jams along candidate routes. Figure 5 illustrates:
- H as the hypothesis of behavior to validate that provides an output indicating the traffic obstruction significance for a specific road segment, H and its parameters being defined in the first step of the method ;
- A, B and C as the respective outcomes of H for the three road segments a, b and c, once the hypothesis has been implemented into at least one service instance ;
- pa, qa, ra as the sensor-based observations related to road segment a (and analogues notations for road segments b and c);
- u, v, w as the parameters of the Hypothesis H (in this embodiment, there is a plurality of parameter) weight functions for each respective sensor-based observations input pₓ, qₓ, rₓ as internal components to H;
- S_{A}, S_{B}, S_{C} as the first set of data i.e. the outcomes of the data sources once the hypothesis H has been tested.

S_{A}, S_{B}, S_{C} are correlated into the node "correlation", corresponding to the third step of the method. The result of the correlation is a second value u', v', w' of the parameters of the hypothesis H. In this embodiment, u', v', w' are passed into the optional Adaptation strategy node in order to stabilize the hypothesis of behavior H. The outcomes of the Adaptation strategy node are a third value u", v", w" of the parameters of the hypothesis H e.g. based on a maximum threshold to the variance of the parameters distribution. The updated Hypothesis H is used for any future service instances of the service of the data sources and can optionally also be immediately adopted in running service instance.

## Claims

1. Process for validating a hypothesis of behavior of a plurality of data sources (DS1; DS2,..., DSn), said data sources being connected to a service platform (SP) via a network, said service platform comprising a plurality of service templates, said hypothesis comprising at least one parameter, said process comprising :
- a first step of defining a first value u of the at least one parameter of the hypothesis of behavior to validate ;
- a second step of implementing the hypothesis of behavior to validate into at least one of the plurality of service templates ;
- a third step of correlating, according to a correlation method, a first set of data (SD1) collected from a selection of data sources in order to calculate a second value u' of the at least one parameter of the hypothesis of behavior to validate.

2. Process according to claim 1 wherein it comprises a fourth step of updating the at least one parameter of the hypothesis with the second value.

3. Process according to claim 2 wherein the second step and the third step are repeated once the fourth step has been performed, the at least one parameter being updated with the second value.

4. Process according to claim 2 wherein the correlation method comprises a statistical operation, the first set of data collected from the selection of data sources being correlated according to said statistical operation.

5. Process according to claim 1 wherein it comprises a fifth step of modifying the second value of the at least one parameter into a third value according to an adaptation strategy.

6. Process according to any one of the previous claims wherein the adaptation strategy comprises an interpolation or extrapolation technique, observing the evolution of said at least one parameter for which new values are proposed by the correlation method, in turn proposing interpolated or extrapolated improved parameter values from that, so as to make the value of the at least one parameter evolve according to said adaptation strategy.

7. Process according to claim 1 wherein the first step comprises defining the correlation method of the third step.

8. Process according to claim 5 wherein the first step comprises defining the adaptation strategy of the fifth step.

9. Process according to any one of the previous claims wherein the behavior of the plurality of data sources comprises a second set of data, said second set of data corresponding to an output of said plurality of data sources in response to a service instance of at least one service template.

10. Process according to any one of the previous claims wherein the hypothesis comprises a plurality of parameter.
